# EUROPÄISCHE PATENTANMELDUNG

(11) **EP 1 195 609 A2**
(43) Veröffentlichungstag der Anmeldung: **10.04.2002**
(21) Anmeldenummer: 01203682.8
(22) Anmeldetag: 27.09.2001
(51) Int. Cl.: G01N 35/02

(54) **Analysenvorrichtung mit Probendeckelöffnungseinrichtung**

(30) Priorität: 06.10.2000 DE 10049491
(71) Anmelder: Mettler-Toledo GmbH, 8606 Greifensee (CH)
(72) Erfinder: Spitz, Urs, 8700 Küsnacht (CH); Aichert, Albert, 8635 Oberdürnten (CH); Wälte, Willi, 9430 St. Margrethen (CH)

(57) **Zusammenfassung**

Eine Analysenvorrichtung weist ein Gerätegehäuse (1) mit einem Bewegungsantrieb (2) für einen Probenträger (4) auf, der wenigstens zwei Halteanordnungen (5) für zu analysierende Proben (32) besitzt. Mit Hilfe des Bewegungsantriebes (2) werden die Proben (32) jeweils schrittweise entlang einer vorbestimmten Bahn an eine am Gerätegehäuse (1) montierte Analysiereinrichtung (16) gebracht, wo sie einer Analyse unterzogen werden. Entlang der Bahn, in Bewegungsrichtung vor der Analysiereinrichtung (16), ist eine Deckelöffnungseinrichtung (50) zum Öffnen eines allfälligen, die Proben (32) abdeckenden Deckels (32') vorbestimmter Form und Dicke (H) angeordnet. Der zugehörige Deckel (32') für die Proben (32) ist vorteilhaft aus einem nicht-magnetischen Material mit einem Magnetankerteil gefertigt.

## Beschreibung

Die Erfindung bezieht sich auf eine Analysenvorrichtung nach dem Oberbegriff des Anspruches 1 sowie auf einen Probendeckel nach Anspruch 13. Eine gattungsgemäße Analysenvorrichtung ist aus der nicht vorveröffentlichten Patentanmeldung DE 100 18 876.1 bekannt.

Es geht bei dieser älteren Patentanmeldung um die Automatisierung und Erhöhung der Effizienz des Analysenvorganges. Die rasche und wirkungsvolle Durchführung der Analyse wird im allgemeinen auch keine Verfälschung durch Verdunstung flüchtiger Bestandteile einer Probe zulassen.

Der Erfindung liegt nun aber die Aufgabe zugrunde, zu verhindern, daß die Probe vor von außen kommenden Verunreinigungen ebenso geschützt wird, wie durch Verdunstungen etwa beim Anhalten der Analysenvorrichtung. Solche Verdunstungen sind insbesondere dann unangenehm, wenn sie in belästigender Weise riechen, wie Ammoniak, Schwefelverbindungen, z.B. Merkaptane, usw.

Erfindungsgemäß gelingt die Lösung dieser Aufgabe durch die kennzeichnenden Merkmale des Anspruches 1. Bei der Lösung der Aufgabe lag eine Schwierigkeit darin, daß es wohl bekannt ist, Proben durch Deckel abzudecken, wenn man dies als erforderlich erachtete. Deckel aber verhindern den Zugang zu der zu analysierenden Probe. Die erfindungsgemäße Lösung hingegen macht das Abdecken der Probe möglich, ohne die automatische Analyse zu beeinträchtigen.

Deckelhalteeinrichtungen sind für andere Zwecke, nämlich für das Lagern, Transportieren und Handhaben von Schüttgütern in verschiedener Ausbildung bekannt. So wird in der GB-A-1,380,067 an Hand der Fig. 4 eine mechanische Deckelöffnungs- und -halteeinrichtung beschrieben, deren Zusammenwirken mit dem Deckel diesem Dokument nicht zu entnehmen ist. Die EP-A-0 847 946 gibt aber einen Hinweis, wie ein mechanisches Zusammenwirken von Deckelhalteeinrichtung und Deckel aussehen könnte, um diesen abzuheben. Eine andere Lösung findet sich in der FR-A 2 640 598, bei der der Deckel seitlich verschoben wird. Anders als mit einer mechanischen Deckelhalteeinrichtung sieht die EP-A-0 547 861 einen Saugteller zum Ansaugen einer glatten Deckeloberfläche vor.

Schließlich ist aber aus der DE-C-1 188 882 auch schon eine magnetische Deckelhalteeinrichtung bekannt geworden.

Aus der Tatsache, daß all diese bekannten Deckelöffnungs- bzw. -halteeinrichtungen für gröbere Anwendungen gedacht waren, ergibt sich ihre relativ komplizierte Ausführung, die an eine Übernahme solcher Konstruktionen für die Zwecke einer Analysenvorrichtung nicht denken ließen. Dennoch sei hier erwähnt, daß auch im Rahmen der Erfindung etwa mechanische Lösungen ebenso Anwendung finden können, wie pneumatische. Insbesondere müßte eine erfindungsgemäße Analysenvorrichtung nicht unbedingt eine Deckelhalteeinrichtung aufweisen; beispielsweise könnte der Deckel an einem Scharnier am Probenbehälter gehalten werden, wobei er bei seiner Bewegung vor der Analysiereinrichtung aufgeklappt und nach der Analyse von einer gesonderten Schließeinrichtung wieder zugeklappt (oder auf andere Art geschlossen) wird.

Dies würde aber zwei gesonderte Einrichtungen für das Öffnen und Schließen erfordern, weshalb es bevorzugt ist, wenn die Deckelöffnungseinrichtung auch als Deckelhalteeinrichtung zum Halten des Deckels in geöffneter Lage ausgebildet ist.

Es wurde oben bereits erwähnt, daß im Rahmen der Erfindung auch mechanische oder pneumatische Einrichtungen (z.B. mit Saugteller) Verwendung finden können. Die vorgenannten Dokumente zeigen aber, wie kompliziert solche Einrichtungen, noch dazu auf dem kleinen, bei einer Analysenvorrichtung zur Verfügung stehenden Raum, werden können. Deshalb ist es bevorzugt, wenn die Deckelhalteeinrichtung einen über einen Schalter erregbaren Elektromagneten aufweist.

Ein solcher Magnet könnte beispielsweise in zwei Betriebsarten geschaltet werden, so daß er in einer Betriebsart den Deckel anzieht, in der anderen Betriebsart zum neuerlichen Abdecken der Probe abstößt. Dies erfordert jedoch teure Schaltungen und umpolbare Magnete. Einfacher ist es hingegen, wenn der Elektromagnet ein weichmagnetisches Joch besitzt, so daß er nach seinem Entregen ohne wesentlichen Restmagnetismus bleibt und den Deckel einfach losläßt.

Im Prinzip würde ein einziger Pol eines Magneten zum Anziehen des Deckels genügen. Eine besonders sichere Haftung ergibt sich jedoch, wenn daß der Elektromagnet mit einem U-Kern-Magnetjoch mit zwei der Probe bzw. dem Deckel zugekehrten Polen ausgebildet ist, weil so von einem Pol zum anderen, über den Deckel als Anker, ein geschlossener magnetischer Kreis aufgebaut wird.

Die Anwendung eines Magneten selbst kann auf verschiedene Weise erfolgen. Beispielsweise könnte er auf den Deckel zu bewegt werden, um ihn schiebend oder anhebend oder auch um ein Scharnier kippend zum Öffnen des Probegefäßes zu bewegen. Konstruktiv einfacher ist jedoch eine Lösung, bei der der Elektromagnet stationär oberhalb der Höhe der darunter vorbeibewegten Probe angeordnet ist, so daß er den Deckel einfach anhebt.

Um durch eine allfällige Fehlfunktion (Nicht-Ansaugen des Deckel oder Ausfall des Stromes zum Elektromagneten) nicht der Gefahr ausgesetzt zu sein, daß zwei übereinander geratene Deckel den Ablauf an der erfindungsgemäßen Analysenvorrichtung stören können, ist vorzugsweise vorgesehen, daß die Deckelöffnungseinrichtung, und insbesondere ihr Elektromagnet, wenigstens zwei Deckeldicken oberhalb der Höhe der Probe bzw. eines Deckels angeordnet ist. Dies gibt auch eine gute Sicherheit gegen ein unbeabsichtigtes Öffnen durch einen allfälligen Restmagnetismus eines zu nahe am vorbeigeführten Deckel gelegenen Elektromagneten.

Um ein Umrüsten oder ein Nachrüsten bestehender Analysenvorrichtungen zu ermöglichen, ist es bevorzugt, wenn die Deckelöffnungseinrichtung mit Hilfe einer zerstörungsfrei lösbaren, mindestens zweiteiligen Montageeinrichtung am Gerätegehäuse montierbar ist.

Es wird vorteilhaft sein, wenn der Bewegungsantrieb ein Drehantrieb für einen scheibenförmigen Probenträger ist und so eine kreisförmige Bewegungsbahn bildet, an der die Deckelöffnungseinrichtung montiert ist.

Gerade in diesem letzteren Fall (allerdings auch bei linear verschiebbaren Proben, was im Rahmen der Erfindung auch möglich wäre) ist es günstig, wenn der Analysiereinrichtung mit Hilfe eines Programmgebers mindestens eine Bewegungsprogrammsteuerung zugeordnet ist, wobei ein Bewegungsprogramm die Betätigung der Deckelhalteeinrichtung umfaßt, wodurch ein allfälliger Deckel abnehmbar und haltbar ist, während die deckellose Probe mittels der Analysiereinrichtung einer Analyse unterzogen wird, worauf der Deckel von der Deckelhalteeinrichtung wieder aufsetzbar ist. Mit einer solchen Bewegungsprogrammsteuerung ist es vorteilhaft, wenn die Bewegungsprogrammsteuerung für ein Weiterbewegen der deckellosen Probe nach dem Abheben des Deckels zur Analysiereinrichtung und zur Rückbewegung der Probe nach der Analyse durch die Analysiereinrichtung zur Deckelhalteeinrichtung zwecks neuerlichen Aufsetzens des Deckels ausgebildet ist.

Es wird ermöglicht, die Analysenvorrichtung mit Proben mit und ohne Deckel zu bestücken - einerseits insbesondere durch die Verwendung eines Elektromagneten, der einfach nichts anzieht, wo nichts vorhanden ist - und anderseits, wenn zwischen einzelnen Proben oder jeder Probe ein Konditioniergefäß, z.B. zum Konditionieren von Analyseelektroden, oder ein Spül- bzw. Waschgefäß zum Reinigen von Analyseeinrichtungen (Pipetten, Elektroden, Absaugdüsen etc.) vorgesehen sein soll. Um nun die erfindungsgemäße Analysevorrichtung auf einfache Weise über das Vorliegen eines solchen Nicht-Probe-Gefäßes zu informieren, ist es günstig, wenn die Bewegungsprogrammsteuerung mindestens eine Sensormarkierung am Probenträger der Analysevorrichtung und mindestens eine stationäre Leseeinrichtung für die Sensormarkierung, z.B. am Gerätegehäuse und/ oder an der Analysiereinrichtung, umfaßt - was an sich schon vorteilhaft ist, wodurch aber auch gegebenenfalls die Deckelöffnungseinrichtung steuerbar ist. Alternativ oder zusätzlich kann der Bewegungsprogrammsteuerung ein Tastenfeld zugeordnet sein, durch welches solche Informationen eingebbar sind. Vorzugsweise ist dieses Tastenfeld (112) mit dem Gerätegehäuse, insbesondere fest, verbunden.

Ein erfindungsgemäßer Deckel für eine durch eine Analysenvorrichtung nach einem der vorhergehenden Ansprüche zu analysierende Probe weist vorzugsweise die kennzeichnenden Merkmale des Anspruches 13 auf. Zwar wäre es theoretisch denkbar, den Deckel zur Gänze aus magnetisierbarem Material herzustellen, doch hat sich dies aus den verschiedensten Gründen als nicht vorteilhaft herausgestellt. Diesem dem Magnetankerteil kann ein nach oben hin gekehrter Abstandhalter - z.B. eine Reihe von Vorsprüngen oder nur ein Vorsprung, sei es aus sich an einem nicht-magnetischen Teil der Deckelöffnungseinrichtung abstützender Abstandhalter aus an sich magnetisierbarem Material oder ein solcher Vorsprung aus nicht-magnetischem Material - zugeordnet sein. Damit wird mit Sicherheit verhindert, daß der Ankerteil so nahe an den Magneten kommt, daß der geringste Restmagnetismus ausreicht, ihn auch dann festzuhalten, wenn er gelöst werden soll.

Ein solcher Abstandhalter wird am einfachsten so realisiert, daß der Magnetankerteil unter einer Schicht aus nicht-magnetischem Material angeordnet ist, die einen vorbestimmten Abstand definiert. Nun könnte es zwar möglich sein, den Ankerteil einfach unter die obere, nicht-magnetische Deckelwand zu setzen. Unter Berücksichtigung der Tatsache, daß gegebenenfalls auch Proben mit aggressiven Dämpfen zu analysieren sind, ist es günstiger, wenn der Magnetankerteil im nicht-magnetischen Material des Deckels enthalten und somit von ihm sowohl nach oben als auch zur Probe hin abgedeckt ist. Die einfachste Ausführung ist dann im Rahmen der Erfindung die, bei der der Deckel aus Kunststoff besteht und der Magnetankerteil vom Kunststoff umgeben, insbesondere umspritzt, ist.

Zwar ist es gerade in den zuletzt genannten Fällen denkbar, den Magnetanker als magnetisierbares Pulver auszubilden, das in das Material des Deckels eingearbeitet ist. Auch ein einfaches Magnetplättchen wäre denkbar. Die Kraftlinien eines, insbesondere zweipoligen, Magneten verlaufen aber günstiger, wenn der Magnetankerteil als ringförmiger Metallteil ausgebildet ist, dessen Durchmesser vorzugsweise etwa dem Polabstand des Elektromagneten der Deckelöffnungseinrichtung entspricht.

Natürlich muß der Sicherheit der Funktion ein Augenmerk geschenkt werden. Ist der Magnetanker einseitig im Deckel untergebracht, können ihn lösende Kippwirkungen entstehen. Ist der Ankerteil aus mehreren, z.B. über den Deckelumfang verteilten, Stücken gebildet, kann zwar eine verbesserte Haftung und ein sicheres Halten erreicht werden, doch wird dann die Deckelöffnungseinrichtung komplexer. Deshalb ist es bevorzugt, wenn der Magnetankerteil etwa mittig am Deckel vorgesehen ist, womit all diese Probleme vermieden werden.

Weitere Einzelheiten der Erfindung ergeben sich aus der nachfolgenden Beschreibung eines in der Zeichnung schematisch dargestellten Ausführungsbeispieles. Es zeigen:
- Fig. 1: eine erfindungsgemäß aufgebaute Analysenvorrichtung in perspektivischer Darstellung, von der
- Fig. 2: einen Schnitt durch die Deckelöffnungseinrichtung veranschaulicht.

In einem Gerätegehäuse 1 ist ein strichliert angedeuteter Bewegungsantrieb 2, insbesondere ein Schrittmotor, für einen über eine strich-punktiert gezeigte Welle 3 zu einer Drehung antreibbaren, scheibenförmigen Probenträger 4. Der Probenträger 4 weist eine Mehrzahl von Halteanordnungen 5 in Form von Stecklöchern für Probebecher 32 entlang einer kreisförmigen Umfangsbahn auf. Der Probenträger 4 hat einen Handgriff 6, so daß er erst mit Proben 32 bestückt, dann am Handgriff 6 ergriffen und auf die aus dem Gehäuse 1 ragende Welle 3 gesetzt werden kann, die beispielsweise unterhalb des Handgriffes 6 in eine formschlüssige Kupplungsöffnung (nicht dargestellt) zur drehschlüssigen Kupplung eingreifen kann.

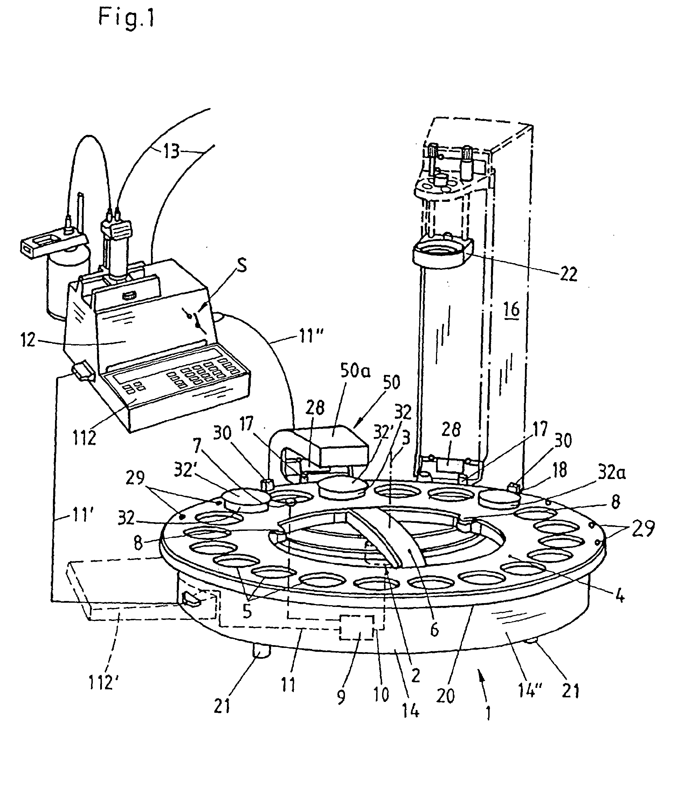

In Fig. 1 sind, der Einfachheit halber, nur ein Teil der Stecklöcher 5 (es könnten auch am Umfang eines Tellers 4 kleineren Durchmessers befestigte Klammern für die Probebecher 32 sein) mit Probebechern 32 bestückt. Rechts neben einem Turm 16 ist eine später zu beschreibende Magnetmarkierung 30 vor einem offenen, als Konditionier- oder Waschbecher dienenden Becher 32a angebracht, wogegen die an der linken Seite ersichtlichen Becher 32 jeweils einen Deckel 32' besitzen. Dieser Deckel 32' dient mehreren Zwecken. Bei Proben mit unangenehmen Gerüchen soll er das Bedienungspersonal davor schützen; bei Proben mit sich verflüchtigenden Lösungsmitteln soll er das Entweichen eines solchen Lösungsmittels verhindern, um nicht die Analyse zu verfälschen; und schließlich soll er auch verhindern, daß unbeabsichtigt durch das Bedienungspersonal Substanzen in die Probe gelangen, die das Analysenergebnis verfälschen könnten.

Der Probenträger 4 kann an seiner Unterseite Code-Markierungen (magnetische, optische od.dgl.) aufweisen, die beispielsweise die Art der an den in den Halteanordnungen 5 steckenden Proben 32 durchzuführenden Analyse und/oder die durchzuführenden Schritte des Bewegungsantriebes 2 an das Gerät weitergibt. Beispielsweise kann es erwünscht sein, etwa nur den Inhalt jeder zweiten Probe 32 zu analysieren, während für den dazwischenliegenden Probebecher 32 ein anderes Programm, wie etwa ein Waschprogramm für Analyseelektroden, oder ein Konditionierprogramm, vorgesehen ist. Für diese Code-Markierungen ist mindestens eine stationäre Leseeinrichtung an der Oberseite des Gerätegehäuses 1, beispielsweise bei 7, vorgesehen, die die, z.B. bei 8 am Probenträger 4 vorgesehenen, Markierungen liest. Das Ergebnis dieser Lesung wird einem Programmgeber 9 mitgeteilt, der seinerseits entweder den Bewegungsantrieb 2 über eine Leitung 10 steuert und/oder über eine interne Leitung 11 und ein daran angestecktes Kabel 11' an ein Steuergerät 12 weitergibt, das zweckmäßig als Computer ausgebildet ist. Dieser Computer 12 kann dann gleichzeitig dazu benützt werden, die über Kabel 13 (nur abgerissen, ohne die an ihrem Ende befindlichen Meßsonden, dargestellt) herangeführten Meßdaten auszuwerten. Allerdings ist es bevorzugt, wenn mindestens das Tastenfeld 112 des Computers 12 in der Art der strichlierten Darstellung 112' mit dem Gehäuse 1 unmittelbar verbunden ist, um so herumliegende Kabelführungen so weit als möglich zu vermeiden.

Am Gerätegehäuse 1 ist - nach der oben genannten deutschen Patentanmeldung DE 100 18 876.1, deren Inhalt hier durch Bezugnahme als geoffenbart gelten soll - eine Reihe von gegenseitig beabstandeten Montagelöchern eingebracht ist, deren Abstand entweder genau dem Abstand der Halteausnehmungen 5 des Probenträgers 4 oder einem Bruchteil mit einem ganzzahligen Nenner, also z.B. ½ oder ¼ davon, entspricht. Wenn nun der schon erwähnte, als Analysiereinrichtung wirkende Turm 16 mittels in die genannten Löcher eingeschraubten Montageschrauben 17 fixiert wird, kann sich ein Fuß 18 des Turmes 16 an der oberen Gehäusefläche abstützen, wogegen sich eine etwa vertikal verlaufende Fläche des Turmes entlang seines Fußes 18 an der Mantelwand 14 abstützt. Auf diese Weise ist ein stabiler Halt des Turmes 16 am Gehäuse 1 mit nur zwei Montageschrauben 17 gesichert. Ebenso wird eine Deckelöffnungseinrichtung 50 zum Öffnen eines allfälligen, die Proben 32 abdeckenden Deckels 32' mit Montageschrauben 17 (nur eine ist zu sehen) in den genannten Löchern - gesehen in Drehrichtung des Probeträgers 4 (Uhrzeigersinn) - vor dem Turm 16 fixiert.

Es versteht sich, daß an Stelle von zwei Montageschrauben 17 auch deren mehrere vorgesehen sein können. An Stelle von Montageschrauben 17 könnten Steckdübel, Stifte, Krallen oder ähnliche Befestigungsmittel verwendet werden. Ebenso könnte eine weitere horizontale Abstützfläche des Turmes 16 bzw. der Deckelöffnungseinrichtung 50 das Gerätegehäuse 1 untergreifen, welches zweckmäßig sowieso durch, beispielsweise justierbare, Füße 21 von der Standfläche eines (nicht dargestellten) Laboratoriumstisches abgehoben ist.

Ein weiterer Vorteil ist dadurch gegeben, daß am Turm 16 eine das Programm bzw. den Bewegungsablauf für den Probenhalter 4, den Analysenturm 16 und die Deckelöffnungseinrichtung 50 steuernde Leseeinrichtung im Bereich eines Feldes 28 oder einem entsprechenden Feld 28 an der Deckelöffnungseinrichtung 50 vorgesehen sein kann. Diese Leseeinrichtung 28 beinhaltet beispielsweise eine Hallsonde, und der Probenträger 4 kann, insbesondere an seinem Umfang, eine Reihe von jeweils einer Halteausnehmung 5 zugeordneten Stecklöchern 29 besitzen, in welche zur Bewegungsprogrammsteuerung die Magnete 30 befestigbar sind. Damit kann beispielsweise, z.B. in Abhängigkeit von einem entsprechenden Befehl an den Computer 12, vom jeweiligen Magneten 30 ein besonderes Programm ausgelöst werden, etwa daß die so markierte Probe nicht auf ihren pH-Wert zu prüfen und deshalb an dem jeweiligen, den pH-Wert prüfenden Turm ungeprüft vorbeigeführt werden soll.

Dies kann beispielsweise so funktionieren, daß etwa an der Deckelöffnungseinrichtung 50 beim jeweiligen Bewegungsschritt des Probenträgers 4 eine Probe 32 angehalten wird, um den Deckel 32' vom Probenglas 32 abzunehmen, wenn keine Markierung 30 vorgesehen ist. Steht hingegen an dieser Stelle ein Magnet 30, so handelt es sich beispielsweise um einen deckellosen Konditionierbecher 32a, bei dem dann aber ein Halter 22 am Turm 16 nicht abgesenkt wird, um eine Analyse vorzunehmen, allenfalls nur zum Konditionieren oder Waschen. Es versteht sich, daß die Leseeinrichtung 28 sehr unterschiedlich ausgebildet werden kann, beispielsweise zum Lesen einer am Probenträger 4 statt eines Magneten 30 angebrachten Strich- oder Farbmarkierung oder einer anderen Markierung 30.

Es versteht sich, daß es im allgemeinen nicht damit getan sein wird, den jeweiligen Deckel 32' vom Probebecher 32 abzuheben. Zwar könnte der Deckelöffnungseinrichtung 50 eine Transporteinrichtung, z.B. ein Förderband, zugeordnet werden, auf das die Deckelöffnungseinrichtung den jeweilig abgehobenen Deckel 32' ablegt, und mit deren Hilfe der Deckel 32' dann einem Vorrat an Deckeln oder einer - in Bewegungsrichtung nach dem Turm 16 gelegenen - Deckelschließeinrichtung zugeführt wird. Im vorliegenden Fall ist jedoch bevorzugt die Ausbildung so getroffen, daß die Deckelöffnungseinrichtung 50 auch als Deckelhalteeinrichtung wirkt und den Deckel 32' jeweils solange festhält, bis der Turm 16 seine Analyse an dem dann offenen Probebecher durchgeführt hat, worauf der Deckel 32' wieder auf den Probebecher 32 aufgesetzt wird.

Es versteht sich, daß die Deckelhalteeinrichtung auch als separate Einrichtung, neben der Deckelöffnungseinrichtung 50 ausgebildet sein könnte. Beispielsweise könnte die Deckelöffnungseinrichtung als Greifer, nach Art eines Roboters, ausgebildet sein, der den Deckel 32' auf einem Tablett der Deckelhalteeinrichtung ablegt und zum Schließen des Probebechers 32 nach der Analyse wieder aufnimmt. Dieselbe Lösung wäre auch bei Verwendung eines an einem beweglichen Träger befestigten Elektromagneten denkbar. Es ist aber klar, daß dann ein aufwendiger Bewegungsantrieb für Greifer oder Magneten vorgesehen werden müßte, der beim vorliegenden Ausführungsbeispiel erspart wird.

Um aber zu ermöglichen, daß die Deckelöffnungseinrichtung 50 auch als Deckelschließeinrichtung wirkt, ist es erforderlich, den im Uhrzeigersinn schrittweise gedrehten Probeträger 4 zuerst von der Deckelöffnungseinrichtung 50, nach Abnahme des Deckels 32' zum Analysenturm 16 bewegen und dann zum neuerlichen Aufsetzen des von der Deckelöffnungs- und -halteeinrichtung 50 während der Analyse gehaltenen Deckels 32' wieder um den entsprechenden Schritt wieder zur Deckelöffnungseinrichtung 50 zurückzubewegen. Im vorliegenden Fall liegt der Turm 16 (lediglich zur Deutlichkeit der Darstellung) um zwei Löcher 5 von der Deckelöffnungseinrichtung 50 in Bewegungsrichtung (Uhrzeigersinn) versetzt, doch ist klar, daß zur Beschleunigung des Durchganges der Probebecher 32 durch den Vorgang der Analyse es günstig ist, wenn die Deckelöffnungseinrichtung 50 so nahe als nur möglich, d.h. nur um einen Schritt bzw. nur um ein Steckloch 5 versetzt, am Turm 16 angeordnet wird.

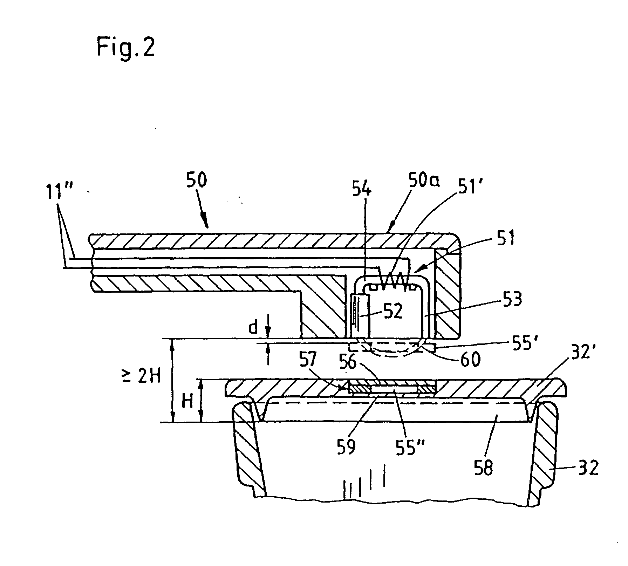

Um nun einen synchronen Bewegungsablauf zu erhalten, ist der Computer 12 sowohl mit dem Programmgeber 9, und zwar über die Leitung 11' verbunden, der seinerseits über die Leitung 10 den Bewegungsantrieb, z.B. Schrittmotor 2, für den Probeträger 4 steuert, als auch über eine Leitung 11" mit der Deckelöffnungseinrichtung 50, um deren Magnet (der später noch an Hand der Fig. 2 beschrieben wird) synchron zu steuern. Dabei kann sich ein Programm mit folgenden Schritten ergeben, falls nicht eine Markierung 30 etwas anderes befiehlt:
1. Zuführen des jeweils nächsten Probebechers 32 im Uhrzeigersinn zur Deckelöffnungseinrichtung 50, während, vorzugsweise, gleichzeitig ein bereits geöffnetes Probeglas 32 vor die Analysiereinrichtung 16 gebracht wird;
2. Erregen des noch zu beschreibenden Deckelöffnungsmagneten oder eines anderen Deckelöffnungsaktuators, während gleichzeitig der Halter 22 für die Analysengeräte (Elektroden, Pipetten etc.) am Turm in den jeweiligen geöffneten Probebecher 32 abgesenkt und die Analyse durchgeführt wird, worauf der Halter 22 wieder gehoben und die von ihm gehaltenen Analysengeräte aus dem jeweiligen Probebecher 32, gegebenenfalls unter gleichzeitiger Waschung, herausgezogen werden;
3. Rückwärtsbewegen des eben analysierten Probebechers 32 im Uhrzeiger-Gegensinn zur Deckelöffnungs- und -halteeinrichtung 50, die während der Analyse den Deckel 32' noch festgehalten hat;
4. Aufsetzen des Deckels 32' auf den Probebecher mit der soeben analysierten Probe;
5. wie 1

Ein bevorzugter Programmablauf, bei dem der Deckel nur so kurz wie nötig gehalten werden muss, geht davon aus, dass die 1. Reihe von Probenbechern mit einem Konditionierbecher ohne Deckel beginnt, und sieht folgendermassen aus:
1. Zuführen des ersten Probenbechers im Uhrzeigersinn zur Deckelöffnungseinrichtung 50 und Abheben des Deckels 32'.
2. Drehen des Probenträgers 4 im Gegenuhrzeigersinn bis der Konditionierbecher 32a unter der Deckelöffnungseinrichtung 50 steht und Absenken des Deckels 32' auf den Konditionierbecher 32a.
3. Drehen des Probenträgers 4 im Uhrzeigersinn bis der geöffnete Probenbecher unter dem Turm 16 steht. Durchführen der Analyse. Der Abstand zwischen Turm 16 und Deckelöffnungseinrichtung ist 50 so eingestellt, dass nun auch der nächste Probenbecher 32 mit Deckel unter der Deckelöffnungseinrichtung steht.
4. Abheben des Deckels 32' und Drehen des Probenträgers 4 im Gegenuhrzeigersinn bis der zuletzt analysierte Probenbecher unter der Deckelöffnungseinrichtung steht, Aufsetzen des Deckels auf diesen Probenbecher.
5. Wiederholen der Schritte 3. Und 4., bis die Reihe der Probenbecher abgearbeitet ist, wobei immer der Deckel des neuen Probenbechers auf den zuletzt analysierten Probenbecher aufgesetzt wird. Am Ende der Reihe der Probenbecher befindet sich wieder ein Konditionierbecher mit Deckel, damit der letzte analysierte Probenbecher ebenfalls verschlossen werden kann.

An Hand der Fig. 2 soll nun eine bevorzugte Ausführung einer so ausgebildeten Deckelöffnungs- und -halteeinrichtung 50 mit einem besonders bevorzugten Ausführungsbeispiel eines Deckels 32' beschrieben werden.

Wie aus den Fig. 1 und 2 ersichtlich, weist die Deckelöffnungs- und -halteeinrichtung 50 einen über den Probeträger 4 bzw. über die Probebecher 32 sich erstreckenden etwa horizontal verlaufenden Tragarm 50a auf. An diesem Tragarm 50a befindet sich ein, vorzugsweise vom Computer 12 und oder dessen Tastenfeld 112 oder 112', gesteuerter Deckelöffnungsaktuator, der im bevorzugten Falle von einem Elektromagneten 51 gebildet wird, der an die zum Computer 12 führende Leitung 11" angeschlossen ist. Ein Verstärker für den Magnetstrom kann an beliebiger Stelle angeordnet sein, beispielsweise im Gehäuse des Computers 12. Der Computer 12 kann dann eine Spule 51' des Elektromagneten 51 durch Schließen eines Schalters S (Fig. 1) zur vom Programm festgesetzten Zeit erregen.

Da die Probebecher 32 von den Stecklöchern 5 aus zweckmäßig eine vorbestimmte Höhe haben werden, d.h. nur standardisierte Probebecher 32 verwendet werden, wird auch die Höhe der auf ihnen aufsitzenden Deckel 32' bekannt sein. Zweckmäßig ist die Anordnung so, daß bei einer Bauhöhe H des jeweiligen Deckels 32', der Abstand zum Magneten 51 mindestens 2H beträgt, um bei einer Fehlfunktion oder einer Falschbedienung und etwa der Ablage zweier Deckel 32' auf einem Probebecher 32 dennoch ein einwandfreies Durchlaufen der Proben unter dem Arm 50a zu ermöglichen.

Der Elektromagnet 51 kann an sich beliebig ausgebildet sein, beispielsweise als Stabmagnet, z.B. mit einem einen Pol bildenden Stab. Es hat sich jedoch herausgestellt, daß es weitaus sicherer ist, wenn der Magnet 51 in der dargestellten Weise mit einem U-Kern-Magnetjoch mit zwei der Probe bzw. dem Deckel zugekehrten Polen, nämlich außer dem Pol 52 noch mit einem von ihm in einem Abstand liegenden, annähernd parallelen Pol 53, ausgebildet ist. Dabei ist es günstig, wenn der Elektromagnet 51 ein weichmagnetisches Joch bestehend aus den beiden Polschenkeln 52 und 53 sowie einem Bügelteil 54 besitzt, um die magnetische Remanenz so gering wie möglich zu halten.

Dem Magneten 51 liegt im Deckel 32' ein Ankerteil 55 gegenüber. Es kann erwünscht sein, diesen vorzugsweise ringförmigen, Ankerteil 55 mit einer oberen Schicht 56 aus Kunststoff in eine Vertiefung 57 des Deckels 32' einzupressen oder einrasten zu lassen. Der Deckel 32' ist am Probenbecher 32 vorteilhaft mittels eines Zentrierrandes 58 zentriert, so daß eine genau zentrierte Lage des Ankerteiles 55 gegenüber dem Magneten 51 gesichert ist. Es versteht sich, daß zwar ein Zentrierrand in der dargestellten Weise bevorzugt ist, daß aber auch einzelne, über den Umfang des Deckels 32' verteilte, sich axial erstreckende Vorsprünge vorgesehen können, oder eine Umfangsnut als Vertiefung, die den Rand des Probebechers 32 umgreift. Die dargestellte Ausführung ist jedoch bevorzugt. Aus einem ähnlichen Grund, nämlich zur Sicherung einer Zentrierung des jeweiligen Steckloches 5 unter dem Magneten 51, ist es günstig, wenn der Bewegungsantrieb für den Probenträger 4 von einem Schrittmotor 2 gebildet ist, weil mit einem solchen eine genauere Positionierung als mit anderen Motoren möglich ist.

Es ist klar, daß gewünschtenfalls auch mehr als ein Magnetankerteil im Deckel 32' vorgesehen sein können. In diesem Falle wird aber der Aufwand auf seiten der Deckelöffnungseinrichtung 50 etwas größer. Im allgemeinen wird es auch nicht eine so große Rolle spielen, wenn der Magnetankerteil 55 nicht genau im Schwerpunktzentrum des Deckels 32' liegt, doch könnten sich daraus Verkippungen ergeben, die zu einer Fehlfunktion führen mögen, so daß eine möglichst zentrierte Anordnung des Ankerteiles 55 bevorzugt ist.

Auf die geschilderte Weise ist nun der Ankerteil 55, wie es einer vorteilhaften Ausführung entspricht, sowohl nach oben hin, nämlich durch die Kunststoffschicht 56, als auch nach unten hin, nämlich durch einen Boden 59 der Vertiefung 57, abgedeckt. Dies hat verschiedene Vorteile. Einerseits können aggressive, aufsteigende Dämpfe einer Probe das Metall des Ankerteiles 55 nicht von unten her korrodieren, weil der Ankerteil 55 durch den Boden 59 gegen sie geschützt ist. Anderseits ist ein solcher Schutz auch nach oben hin gegeben, so daß etwa Tropfen einer aggressiven Flüssigkeit den Ankerteil auch dann nicht korrodieren können, wenn solche Tropfen auf den Deckel 32' fallen. Aus diesem Grunde ist es übrigens bevorzugt, wenn an Stelle des Einsatzes des Ankerteiles 55 in eine Vertiefung 57 der Ankerteil 55 in einen aus nicht-magnetischem Material, insbesondere aus Kunststoff (chemisch im allgemeinen inert), bestehenden Deckel 32' völlig eingegossen ist.

Zusätzlich aber wirkt die Kunststoffschicht 56 auch als Abstandhalter zur Erzielung eines Abstandes d gegenüber dem Magneten 51. Will man nämlich den oben besprochenen Sicherheitsabstand von ≥ 2H einhalten, so muß der Magnet 51 eine entsprechend starke Anziehungskraft entwickeln, um diese Entfernung überwinden zu können. In einem solchen Fall ist aber die Gefahr groß, daß eine sehr geringe magnetische Remanenz ausreicht, den Deckel 32' in einer strichliert gezeigten Lage 55' festzuhalten, so daß er nach der Analyse nicht mehr auf den Probenbehälter aufgesetzt werden kann. Es ist klar, daß der Abstandhalter auch in anderer Form ausgeführt sein kann, etwa durch aufwärts ragende und sich beispielsweise gegen die Unterseite des Armes 50a stemmende Vorsprünge, doch ergibt sich aus der obigen Erläuterung, daß die Kunststoffschicht 56 einen mehrfachen Zweck erfüllt. Wie strichliert angedeutet, bewirkt die Anordnung zweier dem Ankerteil 55 gegenüberliegender Pole 52, 53 im angezogenen Zustand des Ankers 55 einen geschlossenen magnetischen Kreis von Kraftlinien 60, die den Deckel 32' sicher festhalten. Bei ringförmiger Ausführung des Ankerteiles 55 verlaufen diese Kraftlinien rundherum, was einen besonders guten Halt ergibt. Dabei ist es natürlich vorteilhaft, wenn der Durchmesser des Ankerteiles 55 mindestens bzw. annähernd dem Abstand der beiden Pole 52, 53 voneinander entspricht.

Die Ausbildung der Deckelöffnungseinrichtung 50 mit einem Elektromagneten hat auch den Vorteil, daß keinerlei bewegte Teile vorgesehen werden müssen, so daß der Aufbau einfach und unkompliziert ist, wobei selbst dann eine Fehlfunktion mit Sicherheit vermieden ist, wenn sich etwa auf einem Probenbecher 32 gar kein Deckel befindet und dennoch der Schalter S geschlossen werden sollte. Dennoch kann z.B. ein Magnet 30 die Programmierung im Computer 12 so beeinflussen, daß der Schalter S erst gar nicht geschlossen wird.

### BEZUGSZEICHENLISTE

- 1: Gerätegehäuse
- 2: Bewegungsantrieb
- 3: Welle, Achse
- 4: Probenträger
- 5: Halteanordnungen, Stecklöcher
- 6: Handgriff
- 7: stationäre Leseeinrichtung
- 8: Markierungen
- 9: Programmgeber
- 10: Leitung
- 11: interne Leitung
- 11': Kabel
- 12: Steuergerät, Computer
- 13: Kabel
- 14": Mantelwand v. 1
- 15 16: Turm, Analysiereinrichtung
- 17: Montageschrauben
- 18: Fuß v. 16
- 19 20 21: Füße v. 1
- 22: (Elektroden-)Halter
- 23 28: Leseeinrichtung
- 29: Stecklöcher
- 30: Magnet, steckbare Markierung
- 31 32: Probebecher
- 32': Deckel
- 32a: Konditionierbecher
- 50: Deckelöffnungseinrichtung
- 50a: Tragarm v. 50
- 51: Magnet
- 52: Polschenkel
- 53: Polschenkel
- 54: Bügel
- 55: Ankerteil
- 56: Kunststoffschicht
- 57: Vertiefung
- 58: Zentrierrand
- 59: Boden v. 57
- 60: Kraftlinien

- 112: Tastenfeld
- 112': Tastenfeld (alternativ)

## Patentansprüche

1. Analysenvorrichtung mit einem Gerätegehäuse (1) mit einem Bewegungsantrieb (2) für einen Probenträger (4), der wenigstens zwei Halteanordnungen (5) für zu analysierende Proben (32) aufweist, die mit Hilfe des Bewegungsantriebes (2) jeweils schrittweise entlang einer vorbestimmten Bahn an eine am Gerätegehäuse (1) montierte Analysiereinrichtung (16) bringbar sind, **dadurch gekennzeichnet, dass** entlang der Bahn, in Bewegungsrichtung vor der Analysiereinrichtung (16), eine Deckelöffnungseinrichtung (50) zum Oeffnen eines allfälligen, die Proben (32) abdeckenden Deckels (32') vorbestimmter Form und Dicke (H) angeordnet ist.

2. Analysenvorrichtung nach Anspruch 1, **dadurch gekennzeichnet, dass** die Deckelöffnungseinrichtung (50) einen über einen Schalter (S) erregbaren Elektromagneten (51) aufweist, der zum Halten des Deckels(32') in geöffneter Lage ausgebildet ist.

3. Analysenvorrichtung nach Anspruch 2, **dadurch gekennzeichnet, dass** der Elektromagnet (51) mit einem U-Kern (52-53-54) mit zwei dem Deckel (32') zugekehrten Polen (52-53) ausgebildet ist.

4. Analysenvorrichtung nach Anspruch 3, **dadurch gekennzeichnet, dass** der Elektromagnet (51) stationär in der Deckelöffnungseinrichtung (50) wenigstens zwei Deckeldicken (2H) oberhalb der Höhe der Probe (32) angeordnet ist.

5. Analysenvorrichtung nach einem der vorhergehenden Ansprüche, **dadurch gekennzeichnet, dass** die Deckelöffnungseinrichtung (50) mit Hilfe einer zerstörungsfrei lösbaren, mindestens zweiteiligen Montageeinrichtung (17) am Gerätegehäuse (1) montierbar ist.

6. Analysenvorrichtung nach einem der vorhergehenden Ansprüche, **dadurch gekennzeichnet, dass** der Bewegungsantrieb (2) ein Drehantrieb für einen scheibenförmigen Probenträger (4) ist, der so eine kreisförmige Bewegung ausführt.

7. Analysenvorrichtung nach einem der vorhergehenden Ansprüche, **dadurch gekennzeichnet, dass** die Deckelöffnungseinrichtung (50) nur um den Winkel zwischen zwei benachbarten Halteanordnungen (5) gegenüber der Analysiereinrichtung (16) versetzt montiert ist.

8. Analysenvorrichtung nach einem der Ansprüche 2 bis 7, **dadurch gekennzeichnet, dass** der Analysiereinrichtung (16) mindestens ein Programmgeber mit mindestens einer Bewegungsprogrammsteuerung zugeordnet ist, wobei ein Bewegungsprogramm die Betätigung der Deckelöffnungseinrichtung (50) umfasst, wodurch ein allfälliger Deckel (32') abnehmbar und haltbar ist, während ein weiteres Bewegungsprogramm die deckellose Probe (32) zur Analysiereinrichtung (16) bewegt, wo sie einer Analyse unterzogen wird, um danach wieder zur Deckelöffnungseinrichtung (50) zurückbewegt zu werden, um den Deckel wieder aufzusetzen und die nächste Probe mit Deckel (32') zur Deckelöffnungseinrichtung (50) zu bringen.

9. Analysenvorrichtung nach einem der Ansprüch 2 bis 7, **dadurch gekennzeichnet, dass** der Analysiereinrichtung (16) mindestens ein Programmgeber (12) mit mindestens einer Bewegungsprogrammsteuerung zugeordnet ist, wobei ein Bewegungsprogramm die Betätigung der Deckelöffnungseinrichtung (50) umfasst, wodurch ein allfälliger Deckel (32') abnehmbar und haltbar ist, während ein weiteres Bewegungsprogramm zunächst die zuletzt analysierte deckellose Probe (32) in die Position unter die Deckelöffnungseinrichtung (50) bringt, damit der Deckel darauf abgesetzt werden kann, sodann die geöffnete Probe (32) zur Analysiereinrichtung (16) zur Durchführung der Analyse bewegt, wobei gleichzeitig eine neue bedeckte Probe (32) zur Deckelöffnungsvorrichtung (50) transportiert wird.

10. Analysenvorrichtung nach Anspruch 8 oder 9, **dadurch gekennzeichnet, dass** die Bewegungsprogrammsteuerung mindestens eine Sensormarkierung (8 bzw. 30) am Probenträger (4) und mindestens eine stationäre Leseeinrichtung (7 bzw. 28) für die Sensormarkierung (8 bzw. 30), z.B. am Gerätegehäuse (1) und/oder an der Analysiereinrichtung (16) bzw. Deckelöffnungseinrichtung (50), umfasst, durch die gegebenenfalls der Probenträger (4) und/oder die Deckelöffnungseinrichtung (50) steuerbar sind.

11. Analysenvorrichtung nach Anspruch 10, **dadurch gekennzeichnet, dass** die Sensormarkierung (30) am Probenträger (4) an mindestens einer der Halteanordnungen (5) für eine Probe (32) zugeordneten Befestigungsanordnung (29) zerstörungsfrei lösbar anbringbar ist.

12. Analysenvorrichtung nach einem der Ansprüche 8 bis 11, **dadurch gekennzeichnet, dass** der Bewegungsprogrammsteuerung ein Tastenfeld (112, 112') zugeordnet ist, und dass vorzugsweise dieses Tastenfeld (112') mit dem Gerätegehäuse (1) verbunden ist.

13. Deckel (32') für eine durch eine Analysenvorrichtung nach einem der vorhergehenden Ansprüche zu analysierende Probe (32), **dadurch gekennzeichnet, dass** er aus einem nicht-magnetischen Material mit einem eingelegten Magnetankerteil (55) gefertigt ist.

14. Deckel nach Anspruch 13, **dadurch gekennzeichnet, dass** der Magnetankerteil (55) unter einer Schicht (56) aus nicht-magnetischem Material angeordnet ist, die einen vorbestimmten Abstand (d) definiert.

15. Deckel nach Anspruch 14, **dadurch gekennzeichnet, dass** der Magnetankerteil (55) von dem nicht-magnetischen Material des Deckels vollständig umschlossen wird.

16. Deckel nach Anspruch 15, **dadurch gekennzeichnet, dass** der Deckel (32') aus Kunststoff besteht und der Magnetankerteil (55) vom Kunststoff umgeben, insbesondere umspritzt bzw. eingegossen, ist.

17. Deckel nach einem der Ansprüche 13 bis 16, **dadurch gekennzeichnet, dass** der Magnetankerteil (55) ringförmig ausgebildet ist, dessen Abmessungen vorzugsweise etwa dem Polabstand des Elektromagneten (51) entsprechen und der etwa mittig im Deckel (32') angeordnet ist.

18. Deckel nach einem der Ansprüche 13 bis 17, **dadurch gekennzeichnet, dass** er mindestens einen Zentriervorsprung (58) bzw. eine Zentriervertiefung zum Zentrieren an einemProbenbecher (32) aufweist.
